# FASCICULE DE BREVET EUROPEEN

(11) **EP 0 981 453 B1**
(45) Date de publication et mention de la délivrance du brevet: **25.09.2002**
(21) Numéro de dépôt: 98922787.1
(22) Date de dépôt: 30.04.1998
(51) Int. Cl.: B60C 25/00

(54) **LIGNE D'ASSEMBLAGE D'ENSEMBLES MONTES**
MONTAGESTRASSE FÜR RADEINHEITEN
ASSEMBLY LINE OF MOUNTED ASSEMBLIES

(30) Priorité: 16.05.1997 FR 9706284
(43) Date de publication de la demande: 01.03.2000
(73) Titulaire: Compagnie Générale des Etablissements MICHELIN-MICHELIN & CIE, 63040 Clermont-Ferrand Cedex 09 (FR)
(72) Inventeur: MENARD, Bernard, F-35580 Guichen (FR); PATURE, Frédéric, F-35480 Saint-Malo-de-Phily (FR); PITOU, Jacques, F-57365 Ennery (FR)
(74) Mandataire: Diernaz, Christian
(86) Numéro de dépôt international: EP9802552
(87) Numéro de publication internationale: WO98052781

(56) Documents cités:
- EP-A- 0 641 680

## Description

L'invention concerne une ligne d'assemblage de pneumatiques à leurs roues de montage, en vue d'obtenir des ensembles prêts à être livrés en temps voulu aux clients, qui sont généralement des constructeurs automobiles.

Elle concerne plus particulièrement le système destiné à convoyer un ensemble monté d'un point de la ligne d'assemblage à un autre, et plus particulièrement le système de convoyage situé après le dispositif ou machine de gonflage du pneumatique de l'ensemble monté, dispositif se trouvant situé après la machine à monter ledit pneumatique sur la roue ou monteuse.

Comme connu, il est nécessaire, avant l'opération de montage d'un pneumatique sur sa roue ou sur sa jante de montage, que ce soit manuellement sur une machine dite de garage, ou industriellement sur une monteuse, d'enduire les bourrelets du pneumatique et/ou les sièges de la jante de roue d'un lubrifiant, appelé communément "savon de montage".

S'il est toujours possible de disposer ledit lubrifiant de manière soigneuse, lorsqu'on opère manuellement, à l'aide d'un pinceau par exemple, il est par contre assez malaisé d'opérer rigoureusement dans le cas d'une marche industrielle. En effet, la composition savonneuse est projetée sous forme pulvérisée, soit sur les sièges et rebords de jante de roue, soit sur les sièges et rebords correspondants du pneumatique, jante et pneumatique étant mis en rotation respectivement au moyen de plateaux tournants. Il s'ensuit que les parois extérieures des bourrelets et même des flancs du pneumatique sont fortement lubrifiées, et que le convoyage sur des chaînes à rouleaux métalliques ou sur des courroies transporteuses inclinées, et dont la pente ou inclinaison est nécessaire pour une occupation surfacique moindre de la ligne de montage, s'avère fort aléatoire et aux conséquences coûteuses, le coefficient de frottement du caoutchouc sur rouleaux ou sur courroies devenant faible.

Afin de remédier aux inconvénients ci-dessus, l'invention propose de disposer de suite après la machine de gonflage du pneumatique de l'ensemble monté, un convoyeur dans lequel est aménagée au moins une rampe à rideau d'air comprimé agissant sur la partie radialement inférieure de l'ensemble monté posé horizontalement sur ledit convoyeur.

Ce convoyeur peut être formé de rouleaux métalliques horizontaux, la rampe étant alors préférentiellement placée entre deux rouleaux métalliques et en début de convoyeur. Le convoyeur peut aussi être formé de plusieurs bandes transporteuses, la rampe étant alors placée entre deux bandes.

De manière avantageuse, le convoyeur sera pourvu de deux rampes à rideaux d'air agissant sur la partie inférieure de l'ensemble, l'une en début de convoyeur, l'autre en fin de convoyeur, la distance séparant les deux rampes étant avantageusement comprise entre 1 et 2 mètres.

En outre l'ensemble monté est appelé à subir l'opération dite de "mise en place des talons", opérée à l'aide d'un dispositif ou machine permettant par pression sur les flancs du pneumatique de l'ensemble une légère rotation des bourrelets et une mise en place suite à l'effet de la pression interne de gonflage. La pression est exercée sur les flancs au moyen de viroles circulaires disposées radialement au dessus et au dessous du pneumatique. Ces viroles, suite à leur contact avec les flancs lubrifiés, s'encrassent très rapidement, d'où l'apparition néfaste de particules ou morceaux de matière solide pouvant perturber sérieusement le bon fonctionnement de la machine de mise en place et en conséquence de la ligne d'assemblage. Il est alors particulièrement avantageux de disposer sur la face radialement supérieure de l'ensemble monté une rampe de rideau d'air comprimé destiné au balayage et nettoyage de ladite face supérieure, la rampe étant montée sur un simple bâti.

Que ce soit au-dessus et/ou au-dessous de l'ensemble monté, le(s) rideau(x) d'air comprimé frappent avantageusement les flancs et bourrelets du pneumatique sous un angle d'incidence compris entre 30° et 80° par rapport au plan horizontal du convoyeur sur lequel circule horizontalement l'ensemble monté.

Les caractéristiques et avantages de l'invention seront mieux compris à l'aide de la description qui suit et qui se réfère au dessin annexé sur lequel :
- la figure 1 représente très schématiquement l'ensemble d'une ligne de montage ou assemblage avec ses dispositifs principaux,
- la figure 2 représente schématiquement les rampes de rideaux d'air.

Des moyens d'approvisionnement (2) respectivement en roues R et en pneumatiques P alimentent des convoyeurs d'acheminement desdits pneumatiques et desdites roues vers des postes (2_{P}) et (2_{R}) de lubrification. Les convoyeurs (1) se réunissent avant la machine de montage ou monteuse (3) en présentant le pneumatique P sur sa roue R de montage. Le pneumatique P étant monté et créant avec la roue R un ensemble monté E non gonflé, le poste ou cloche de gonflage (4) permet le gonflage du pneumatique P par introduction du gaz de gonflage entre les talons du pneumatique et les sièges de jante de roue R. L'ensemble E gonflé ressort du poste de gonflage sur un convoyeur (1) à rouleaux métalliques. Il passe alors sur un premier convoyeur à bande transporteuse (1a) horizontal puis sur une deuxième bande transporteuse elle aussi horizontale avant d'être disposé sur une troisième bande dont le tracé est incliné par rapport à l'horizontale et qui peut comporter des courbes, ladite bande permettant à l'ensemble E d'arriver à la machine (6) de mise en place des talons du pneumatique P. Après ladite opération de mise en place, le pneumatique est acheminé vers une machine d'équilibrage (7), l'ensemble E monté, équipé des masses de correction étant alors stocké dans un magasin (8) avant départ et livraison au client.

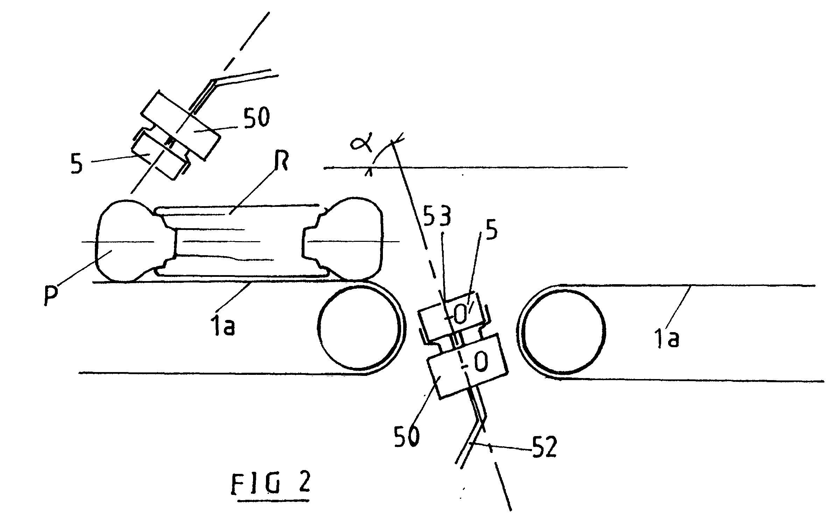

Sur la figure 2 où sont représentées les deux bandes transporteuses (1a) disposées à la sortie du poste de gonflage, apparaissent les rampes (5) à rideau d'air comprimé sous une pression pouvant être comprise entre 5 et 9 bars. La rampe (5) localisée entre les deux bandes transporteuses (1a) du convoyeur permet le nettoyage de la face radialement inférieure de l'ensemble monté E posé à plat sur les bandes (1a). Le nettoyage de la face radialement supérieure dudit ensemble peut se faire par une autre rampe (5) située radialement au-dessus de l'ensemble E, comme montré sur la figure 2.

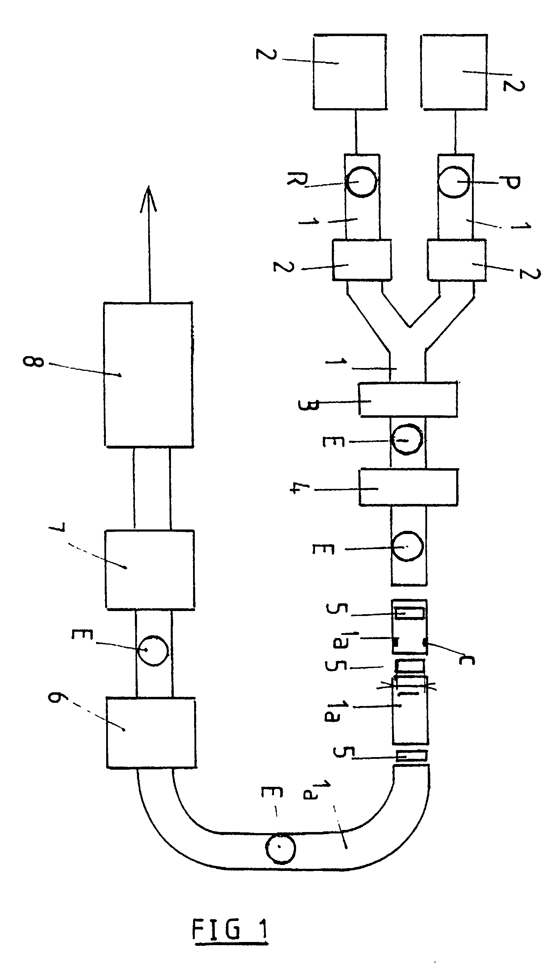

Une rampe (5) est monté sur un support (50). Le support (50) peut être orientable et animé d'un mouvement de rotation autour d'un axe horizontal O, la rampe (5) étant alors fixée solidairement sur le support (50). Le support (50) peut aussi être fixe, la rampe devenant alors orientable par rapport à un axe horizontal O'. La rampe (5) se présente sous forme d'un parallélépipède creux dans lequel pénètre l'air comprimé par deux tuyaux de raccord (52) ; elle est dite à rideau d'air parce qu'elle est munie d'une fine lame ou fente de sortie (53) continue, de longueur pratiquement égale à la largeur 1 de la rampe (5) (figure 1) et de largeur très faible.

Si dans la majorité des cas à traiter, une seule fente (53) suffit, l'angle d'orientation α du rideau d'air, mesuré par rapport à l'horizontale étant compris entre 30° et 80°, et préférentiellement entre 40° et 50°,(des angles respectivement supérieur à 80° et inférieur à 30° étant totalement inefficaces car n'aboutissant qu'à disperser le lubrifiant sur les flancs), on ne s'éloigne pas de l'invention en munissant une rampe (5) de deux fentes (53) à inclinaisons sensiblement parallèles, l'inclinaison d'une fente étant conférée par les parois de la fente et des inclinaisons sensiblement parallèles étant des inclinaisons différant d'au plus 20°. Un système à deux fentes sensiblement parallèles est particulièrement avantageux dans le cas d'ensembles montés de grand diamètre.

Lesdites rampes (5), alimentées en air comprimé par les tuyaux (52), ne le sont pas en continu. Aussi le passage des ensembles E entre une cellule photoélectrique et son réflecteur C située en avant d'une rampe(5) permet l'ouverture d'une électrovanne et l'alimentation de la rampe (5) pendant un temps donné, légèrement supérieur au temps de déplacement de l'ensemble E sur bande.

## Revendications

1. Ligne d'assemblage de pneumatiques P à leurs roues R en vue d'obtenir des ensembles montés E, comprenant des postes de lubrification (2_{P} et 2_{R}) des sièges et rebords de pneumatiques P et roues R respectivement, une machine de montage (3) desdits pneumatiques P sur lesdites roues R, un dispositif d gonflage (4) des ensembles E, ces derniers étant acheminés d'un poste à un autre par des moyens de convoyage (la, 1), **caractérisée en ce qu'**est disposée de suite après la machine de gonflage (4) un moyen de convoyage (1) dans lequel est aménagée au moins une rampe (5) à rideau d'air comprimé agissant sur la partie radialement inférieure de l'ensemble E posé horizontalement sur le moyen de convoyage (1).

2. Ligne d'assemblage selon la revendication 1, **caractérisée en ce que** le moyen de convoyage est un convoyeur à rouleaux métalliques, au moins une rampe (5) étant disposée entre deux rouleaux métalliques.

3. Ligne d'assemblage selon la revendication 1, **caractérisée en ce que** le moyen de convoyage est formée de plusieurs bandes transporteuses, au moins une rampe (5) étant disposée entre deux bandes transporteuses.

4. Ligne d'assemblage selon l'une des revendications 1 à 3, **caractérisée par** la présence de deux rampes (5) agissant radialement au-dessous de l'ensemble E et distantes d'une quantité comprise entre 1 et 2 mètres.

5. Ligne d'assemblage selon la revendication 1 comprenant une machine de mise en place de talons (6), **caractérisée en ce qu'**est disposée radialement au-dessus du moyen de convoyage, au moins une rampe (5) à rideau d'air comprimé agissant sur la partie radialement supérieure de l'ensemble E.

6. Ligne d'assemblage selon l'une des revendications 1 à 5, **caractérisée en ce que** les rampes (5) sont orientables par rapport à un plan horizontal.

7. Ligne d'assemblage selon l'une des revendications 1 à 5, **caractérisée en ce qu'**au moins une rampe (5) est munie de deux fentes ayant des inclinaisons sensiblement parallèles entre elles et inclinées par rapport à un plan horizontal.

## Patentansprüche

1. Montagestraße zum Zusammenbau von Reifen P mit ihren Rädern R, um montierte Einheiten E zu erhalten, die Schmierstationen (2_{P} und 2_{R}) für die Sitze und Randstege der Reifen P bzw. Räder R, eine Maschine zur Montage (3) der genannten Reifen P auf den genannten Rädern R und eine Vorrichtung zum Aufpumpen (4) der Baugruppen E aufweist, welche von einer Station zu einer anderen durch Fördermittel (1a, 1) gefördert werden, **dadurch gekennzeichnet, daß** hintereinander nach der Maschine zum Aufpumpen (4) ein Fördermittel (1) angeordnet ist, in dem mindestens eine Rampe (5) für einen Druckluftvorhang angeordnet ist, der auf den radial unteren Teil der Baugruppe E einwirkt, die auf dem Fördermittel (1) horizontal angeordnet ist.

2. Montagestraße nach Anspruch 1, **dadurch gekennzeichnet, daß** das Fördermittel ein Metallrollenförderer ist, und daß mindestens eine Rampe (5) zwischen zwei Metallrollen angeordnet ist.

3. Montagestraße nach Anspruch 1, **dadurch gekennzeichnet, daß** das Fördermittel von mehreren Transportbändern gebildet ist, und daß mindestens eine Rampe (5) zwischen zwei Transportbändern angeordnet ist.

4. Montagestraße nach einem der Ansprüche 1 bis 3, **gekennzeichnet durch** die Anwesenheit von zwei Rampen (5), die radial unter der Baugruppe E einwirken und um ein Maß beabstandet sind, das zwischen 1 und 2 Meter liegt.

5. Montagestraße nach Anspruch 1, mit einer Maschine zum Aufsetzen der Auflagen (6), **dadurch gekennzeichnet, daß** über den Fördermitteln mindestens eine Rampe (5) für einen Druckluftvorhang angeordnet ist, der auf den radial oberen Teil der Baugruppe E einwirkt.

6. Montagestraße nach einem der Ansprüche 1 bis 5, **dadurch gekennzeichnet, daß** die Rampen (5) bezüglich einer Horizontalebene ausrichtbar sind.

7. Montagestraße nach einem der Ansprüche 1 bis 5, **dadurch gekennzeichnet, daß** mindestens eine Rampe (5) mit zwei Schlitzen ausgestattet ist, die im wesentlichen zueinander parallele Neigungen haben und bezüglich einer Horizontalebene geneigt sind.

## Claims

1. An assembly line for tyres P with their wheels R, with a view to obtaining mounted assemblies E, comprising stations (2_{P} and 2_{R}) for lubricating the seats and flanges of tyres P and wheels R, respectively, a machine (3) for mounting said tyres P on said wheels R, and a device (4) for inflating the assemblies E, the latter being routed from one station to another by means of a means of conveyance (1a, 1), **characterised in that** a means of conveyance (1) is placed after the inflating machine (4), in which means at least one compressed air curtain discharge device (5) is arranged to act on the radially lower part of the assembly E laid horizontally on the means of conveyance (1).

2. An assembly line according to Claim 1, **characterised in that** the means of conveyance is a metal roller conveyor, at least one discharge device (5) being placed between two metal rollers.

3. An assembly line according to Claim 1, **characterised in that** the means of conveyance is made up of several conveyor belts, at least one discharge device (5) being placed between two conveyor belts.

4. An assembly line according to one of Claims 1 to 3, **characterised by** the presence of two discharge devices (5) acting radially below the assembly E and between 1 and 2 metres away from it.

5. An assembly line according to Claim 1, comprising a machine (6) for placement of heels, **characterised in that** it is arranged radially above the means of conveyance, at least one compressed air curtain discharge device (5) acting on the radially upper part of the assembly E.

6. An assembly line according to one of Claims 1 to 5, **characterised in that** the devices (5) are orientable relative to a horizontal plane.

7. An assembly line according to one of Claims 1 to 5, **characterised in that** at least one discharge device (5) is provided with two slots having inclinations substantially parallel to each other and inclined relative to a horizontal plane.
